# FASCICULE DE BREVET EUROPEEN

(11) **EP 1 117 317 B1**
(45) Date de publication et mention de la délivrance du brevet: **14.04.2004**
(21) Numéro de dépôt: 99946242.7
(22) Date de dépôt: 27.09.1999
(51) Int. Cl.: A47J 27/092

(54) **DISPOSITIF DE SECURITE A L'OUVERTURE D'UN APPAREIL DE CUISSON SOUS PRESSION A FERMETURE A BAIONNETTES**
SICHERHEITSVORRICHTUNG ZUM ÖFFNEN VON DAMFDRUCKKOCHTÖPFEN MIT BAJONETTVERSCHLUSS
SAFETY DEVICE FOR OPENING A PRESSURE COOKER WITH LUG-BAYONET TYPE CLOSURE

(30) Priorité: 28.09.1998 FR 9812258
(43) Date de publication de la demande: 25.07.2001
(73) Titulaire: Seb S.A., 69132 Ecully Cedex (FR)
(72) Inventeur: CHAMEROY, Eric, 21260 Véronnes (FR); RHETAT, Eric, Christian, Jacques, 21000 Dijon (FR); BARAILLE, Eric Laurent, 21000 Dijon (FR)
(74) Mandataire: Martin, Didier Roland Valéry
(86) Numéro de dépôt international: PCT/FR1999/002294
(87) Numéro de publication internationale: WO 2000/018279

(56) Documents cités:
- EP-A- 0 736 282
- DE-A- 2 705 712
- DE-A- 3 033 097
- DE-A- 3 112 993

## Description

### DOMAINE TECHNIQUE

La présente invention se rapporte au domaine technique des dispositifs de sécurité à l'ouverture des appareils de cuisson sous pression à fermeture à baïonnettes, mettant en oeuvre un moyen de butée en rotation du couvercle relativement à la cuve selon une direction correspondant à la fermeture de l'appareil, ainsi qu'un moyen de verrouillage relatif du couvercle et de la cuve permettant, sous l'action d'un moyen de commande susceptible d'être actionné par l'utilisateur, d'occuper au moins une position de verrouillage dans laquelle la rotation relative de la cuve et du couvercle est bloquée.

La présente invention concerne un dispositif de sécurité à l'ouverture d'un appareil de cuisson sous pression à fermeture à baïonnettes comportant :
- une cuve avec des rampes de cuve,
- un couvercle avec des rampes de couvercle,
- un moyen de butée en rotation du couvercle relativement à la cuve, disposé pour qu'en position de fermeture les rampes de couvercle engagent les rampes de cuve, le couvercle et la cuve étant alors bloqués en rotation dans le sens de rotation correspondant à la fermeture de l'appareil,
- un moyen de verrouillage relatif du couvercle et de la cuve, monté mobile sur l'appareil, sous l'action d'un moyen de commande susceptible d'être actionné par l'utilisateur, entre au moins une position de déverrouillage permettant l'ouverture de l'appareil, et au moins une position de verrouillage dans laquelle la rotation relative de la cuve et du couvercle est bloquée,
- un indicateur de pression monté librement mobile sur le couvercle pour se déplacer entre une position haute d'étanchéité et basse de fuite selon la pression régnant dans l'appareil.

La présente invention concerne également un autocuiseur du type « *à baïonnettes* » équipé d'un dispositif de sécurité à l'ouverture conforme à l'invention.

### TECHNIQUE ANTERIEURE

En règle générale, les dispositifs de verrouillage/déverrouillage des autocuiseurs de type « *à baïonnettes* » mettent en oeuvre des principes de verrouillage utilisant l'alignement d'une poignée de cuve avec une poignée de couvercle pour déclencher le déplacement d'un verrou, ce déplacement suivant généralement une direction radiale en considération de l'axe de symétrie de la cuve de l'autocuiseur. Un tel principe est connu, par exemple du brevet FR-A-2 484 817 dont le titulaire est le demandeur.

Le brevet FR-A-2 484 817 décrit un autocuiseur dont la poignée comporte un organe de verrouillage relatif du couvercle et de la cuve s'étendant sensiblement radialement par rapport à la paroi de cuve et monté de manière déplaçable selon une direction radiale. Cet organe de verrouillage est pourvu d'un orifice permettant, en position de fermeture, le passage libre d'une soupape de fonctionnement lorsque le couvercle est correctement fermé. En effet, une fermeture incomplète entraîne un défaut d'alignement de la soupape relativement à l'ouverture ménagée dans l'organe de verrouillage coulissant qui empêche, à titre de sécurité, la montée en pression de l'autocuiseur.

Un tel système est largement répandu sur les autocuiseurs de type « *à baïonnettes* », ce principe connu de verrouillage/déverrouillage pouvant être mis en oeuvre selon diverses variantes et configurations faisant par exemple intervenir l'organe de verrouillage de manière directe ou indirecte lors de la mise sous pression de l'autocuiseur. Par ailleurs, il existe de nombreuses configurations d'ouvertures selon le niveau de sécurité prévu lors de la conception, en association avec d'autres dispositifs de sécurité faisant intervenir, à titre d'exemple, une ou plusieurs soupapes de fonctionnement et/ou une déformation du joint d'étanchéité. Une telle configuration est montré par DE-A-3 112 993.

De tels systèmes fournissent à l'utilisateur de l'autocuiseur un niveau de sécurité unanimement reconnu, mais impliquent, au niveau de la conception et de la réalisation industrielle, un certain nombre d'inconvénients.

Il s'avère ainsi que la conception des autocuiseurs utilisant ce principe de verrouillage oblige à prendre en compte une chaîne de cotes multiples et délicates à réaliser. Cette chaîne de cotes comprend en effet un empilage important de composants tels que la cuve, l'axe de fixation des poignées, l'organe de verrouillage, la poignée de couvercle, le couvercle, la compression du joint, etc. Sur le plan industriel, et en particulier au niveau de la fabrication, il en résulte des contraintes dimensionnelles importantes pour le fabricant, ce qui bien évidemment constitue un inconvénient industriel important. Par ailleurs, il n'existe sur ce type d'autocuiseur qu'une seule et unique position de verrouillage relatif du couvercle sur la cuve.

On connaît également des dispositifs de verrouillage/déverrouillage d'autocuiseurs mettant en oeuvre des principes de verrouillage et de sécurité à l'ouverture impliquant une certaine simplification. Ainsi, le brevet FR-A-1 052 130 décrit-il un principe de verrouillage et de sécurité à l'ouverture mettant en oeuvre un moyen de verrouillage relatif du couvercle et de la cuve s'étendant sensiblement parallèlement à la paroi de cuve et mobile verticalement. Le moyen de verrouillage est monté sur le couvercle et est associé à un moyen de commande, associé à une soupape de fonctionnement tarée. Le moyen de verrouillage est destiné à venir pénétrer dans une cavité ménagée dans une poignée de l'appareil pour assurer le verrouillage de l'autocuiseur alors que simultanément la soupape de fonctionnement tarée est mise en action dans son siège par son ressort de compression.

Un tel système, outre le niveau de sécurité relativement rudimentaire qu'il fournit, présente l'inconvénient de ne pas s'affranchir d'une chaîne importante de cotes dimensionnelles, et de fournir un niveau de sécurité à l'ouverture insuffisant. En effet, l'ouverture de l'appareil est possible même si une certaine surpression règne encore dans l'autocuiseur, puisque le déverrouillage s'effectue simultanément avec la libération de la soupape de fonctionnement. Le niveau de sécurité n'est donc pas optimal.

### EXPOSE DE L'INVENTION

Les objets assignés à l'invention visent en conséquence à porter remède aux différents inconvénients énumérés précédemment, et à proposer un nouveau dispositif de sécurité à l'ouverture pour un appareil de cuisson sous pression à fermeture à baïonnettes, dont la sécurité de fonctionnement et de manipulation est améliorée.

Un autre objet de l'invention est de proposer un nouveau dispositif de sécurité permettant un nettoyage facile de l'appareil, et permettant notamment son passage au lave-vaisselle

Un autre objet de l'invention est de proposer un nouveau dispositif de sécurité particulièrement simple à mettre en oeuvre et à réaliser.

Un autre objet de l'invention vise à proposer un nouveau dispositif de sécurité dont la manipulation est simplifiée, et dont le niveau de sécurité est amélioré.

Un objet complémentaire de l'invention vise à proposer un nouveau dispositif de sécurité particulièrement robuste et insensible.

Les objets assignés à l'invention sont atteints à l'aide d'un dispositif de sécurité d'un appareil de cuisson sous pression à fermeture à baïonnettes comportant :
- une cuve avec des rampes de cuve,
- un couvercle avec des rampes de couvercle,
- un moyen de butée en rotation du couvercle relativement à la cuve, disposé pour qu'en position de fermeture les rampes de couvercle engagent les rampes de cuve, le couvercle et la cuve étant alors bloqués en rotation dans le sens de rotation correspondant à la fermeture de l'appareil,
- un moyen de verrouillage relatif du couvercle et de la cuve, monté mobile sur l'appareil sous l'action d'un moyen de commande susceptible d'être actionné par l'utilisateur, entre au moins une position de déverrouillage permettant l'ouverture de l'appareil et au moins une position de verrouillage dans laquelle la rotation relative de la cuve et du couvercle est bloquée,
- un indicateur de pression, monté librement mobile sur le couvercle pour se déplacer entre une position haute d'étanchéité et basse de fuite selon la pression régnant dans l'appareil,
caractérisé en ce que l'indicateur de pression, le moyen de commande et le moyen de verrouillage font partie d'un ensemble unitaire monté sur le couvercle et indépendant ders poignées de l'appareil de cuisson.

### DESCRIPTIF SOMMAIRE DES DESSINS

Les objets assignés à l'invention seront explicités plus en détail à la lecture de la description qui suit, à l'aide des dessins annexés ci-après, donnés à titre purement illustratif et non limitatif, dans lesquels :
- la figure 1 représente selon une vue de dessus, une vue générale d'un dispositif de sécurité conforme à l'invention et équipant un autocuiseur.
- la figure 2 montre, selon une vue en coupe transversale partielle, un détail de réalisation du dispositif de sécurité conforme à l'invention.
- la figure 3 montre, selon une vue de dessus partielle d'un autocuiseur, la position du dispositif de sécurité conforme à l'invention correspondant à la position d'ouverture de l'autocuiseur.
- la figure 4 montre une vue semblable à la figure 3, mais représentant le dispositif de sécurité conforme à l'invention dans une position correspondant à la fermeture et au verrouillage de l'autocuiseur.
- la figure 5 montre, selon une vue transversale partielle effectuée selon la ligne V-V de la figure 6, un détail de réalisation du dispositif de sécurité conforme à l'invention, montrant sa position d'ouverture.
- la figure 6 montre, selon une vue de dessus en coupe partielle, la position de différents organes composant le dispositif de sécurité conforme à l'invention selon la position d'ouverture identique à celle de la figure 5.
- la figure 7 montre, selon une vue en coupe transversale partielle, un détail de réalisation du dispositif de sécurité conforme à l'invention selon la position de verrouillage sans pression.
- la figure 8 montre, selon une vue de dessus partielle, la position de différents organes composant le dispositif de sécurité conforme à l'invention dans une position de verrouillage sans pression identique à celle de la figure 7.
- la figure 9 montre, selon une vue en coupe transversale partielle, la position de verrouillage du dispositif de sécurité conforme à l'invention.
- les figures 10 et 11 montrent, selon des vues de dessus partielles, la position respective de différents organes du dispositif de sécurité conforme à l'invention, respectivement selon une première position de tarage de la soupape de fonctionnement, et selon une seconde position de tarage de la soupape de fonctionnement.

### MEILLEURE MANIERE DE REALISER L'INVENTION

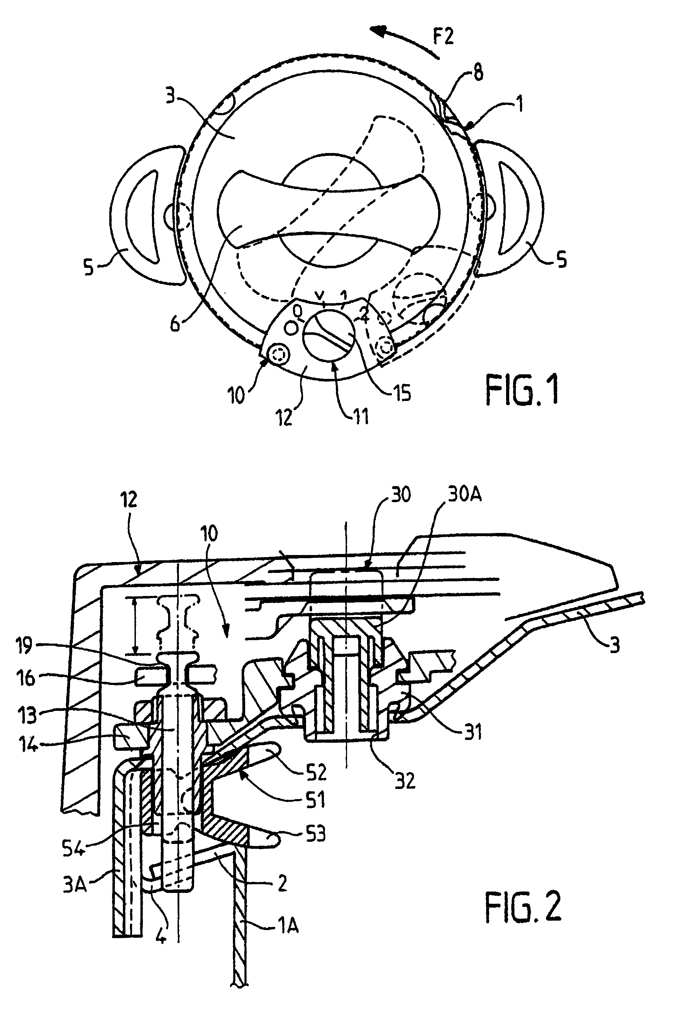

Les figures 1 à 11 montrent un dispositif de sécurité conforme à l'invention équipant un appareil de cuisson sous pression à fermeture à baïonnettes constitué par un autocuiseur.

Ce dernier comporte, de manière classique, une cuve 1, généralement cylindrique, délimitée par une paroi 1A de cuve, comportant dans sa partie supérieure une série de rampes de cuve 2 pour former avec un couvercle 3 également pourvu, à sa périphérie, de rampes de couvercle 4, un appareil de cuisson sous pression à fermeture à baïonnettes. Les rampes de cuve 2 et les rampes de couvercle 4 sont définies par un profil classique incluant deux bords latéraux 2A, 4A et un bord périphérique 2B, 4B.

La cuve 1 et le couvercle 3 sont de manière classique réalisés à partir de matériaux métalliques, du genre acier inoxydable ou aluminium, et par exemple par emboutissage.

Pour sa manipulation, l'autocuiseur est équipé d'organes de préhension, et par exemple d'une paire de poignées 5 solidaires de la cuve 1 et fixée en opposition sur la paroi 1A. Dans l'exemple d'autocuiseur illustré aux figures 1 à 11, le couvercle 3 est pourvu sur sa face supérieure externe, sensiblement dans sa partie centrale, d'une anse 6 servant à la préhension du couvercle 3 et à sa mise en rotation.

De manière connue en soi, le dispositif de sécurité et verrouillage/déverrouillage conforme à l'invention comporte un moyen de butée en rotation du couvercle 3 relativement à la cuve 1 disposé pour qu'en position de fermeture les rampes de couvercle 4 engagent les rampes de cuve 2, le couvercle 3 et la cuve 1 étant alors bloqués en rotation dans le sens de rotation correspondant à la fermeture de l'appareil. Le moyen de butée en rotation peut être réalisé par une série de conformations conjuguées, par exemple à l'aide d'un crevé ou d'une encoche 8 (figure 1) ménagée dans la partie périphérique du couvercle 3 pour venir en butée par rotation et à partir d'une position de départ, contre une rampe de cuve 2.

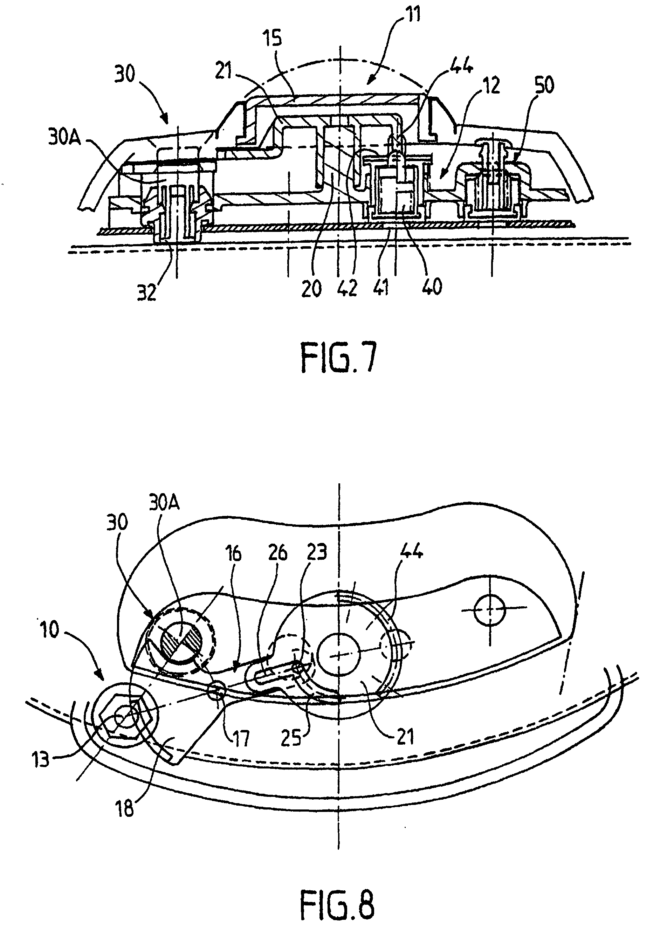

Le dispositif de sécurité et verrouillage/déverrouillage conforme à l'invention comporte également un moyen de verrouillage 10 relatif du couvercle 3 et de la cuve 1, monté mobile sur l'appareil, en l'occurrence l'autocuiseur, sous l'action d'un moyen de commande 11 (figures 1 et 7 par exemple) susceptible d'être actionné par l'utilisateur, entre au moins une position de déverrouillage permettant l'ouverture de l'appareil, et au moins une position de verrouillage dans laquelle la rotation relative de la cuve 1 et du couvercle 3 est bloquée. Le moyen de verrouillage 10 agit en bloquant en rotation le couvercle 3 et la cuve 1 dans le sens de l'ouverture de l'appareil. En association avec le moyen de butée 8, il assure un verrouillage cuve/couvercle, empêchant toute rotation relative des deux pièces.

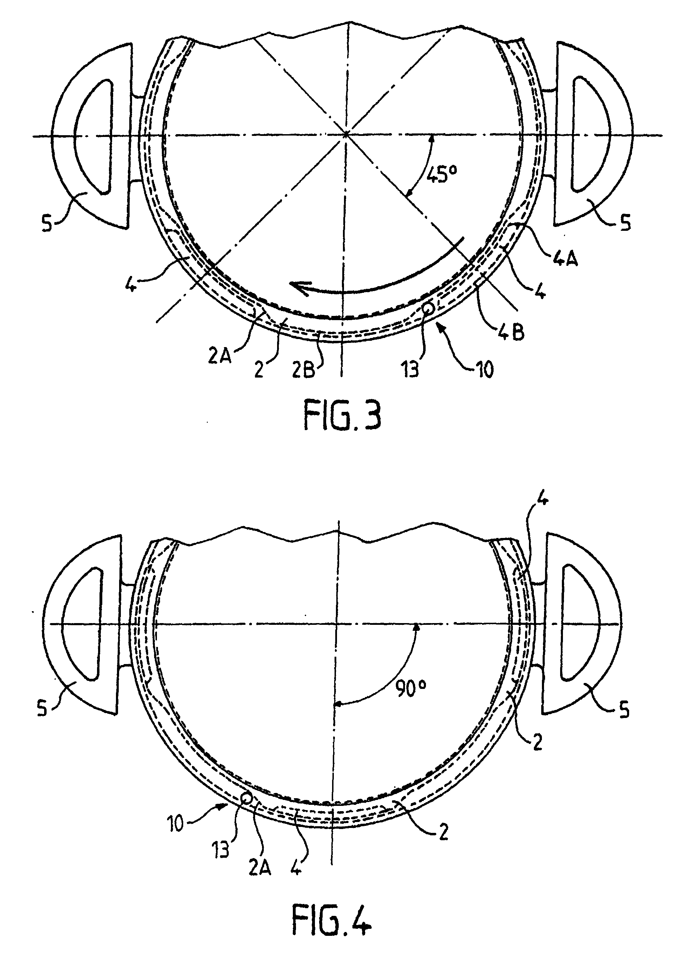

Selon l'invention, le moyen de verrouillage 10 est monté mobile en translation, le long de la paroi de cuve 1A dans la zone de l'entre rampes (figures 2, 5 et 9) pour qu'en position de verrouillage, il soit en appui contre le bord latéral 2A d'une rampe de cuve 2. Selon cette disposition, le moyen de verrouillage 10 s'étend sensiblement parallèlement à la paroi de cuve 1, à l'extérieur et à distance de ladite paroi dans la zone de l'entre rampes de cuve 2 et de couvercle 4 définie par la zone annulaire délimitée par deux diamètres, à savoir celui défini par le bord supérieur de la paroi de cuve 1A et celui défini par le bord tombé 3A du couvercle 3 (figure 2). De cette façon, et tel que cela est visible aux figures 3 et 4 par exemple, le moyen de verrouillage 10 peut venir dans la position de verrouillage illustrée à la figure 4, lorsque le couvercle 3 est dans sa position de butée définie par le moyen de butée 8. Dans cette position, les rampes de cuve 2 et les rampes de couvercle 3 sont superposées et en engagement, de telle sorte qu'à leur voisinage, la zone de l'entre rampe est libre et autorise le passage du moyen de verrouillage 10. Après translation, par exemple et de préférence verticale, le moyen de verrouillage 10 est donc à proximité et en position d'affleurement du bord latéral 2A de la rampe de cuve 2. Le couvercle 3 et la cuve 1 sont alors empêchés en rotation relativement l'un à l'autre selon les deux sens de rotation.

Selon une version particulièrement avantageuse de l'invention, le moyen de verrouillage 10 et le moyen de commande 11 sont montés sur le couvercle 3, et intégrés par exemple dans ou sur une platine 12, intégrée de préférence dans un ensemble unitaire amovible (Fig. 1) monté sur le couvercle 3 et indépendant des poignées 5. L'ensemble unitaire ou la platine 12 est monté, par exemple par vissage sur la face supérieure du couvercle 3, dans une zone quelconque, hors des poignées 5 de cuve. L'unité active de sécurité formée par l'ensemble unitaire 12, formant un tableau de commande, est ainsi solidaire du couvercle 3 et peut être solidarisée ou désolidarisée à volonté du couvercle 3. Son emplacement sur l'appareil s'affranchit par ailleurs totalement de la position et de la forme des poignées. Au total, l'encombrement total de l'appareil est réduit, sa manipulation facilitée, et globalement sa sécurité d'utilisation renforcée.

Selon une autre variante particulièrement intéressante de l'invention, le moyen de verrouillage 10 est formé par un axe, par exemple cylindrique et en matériau métallique, monté sur le couvercle 3, sensiblement parallèle à la paroi de cuve 1 et relié mécaniquement et fonctionnellement au moyen de commande 11. Au sein de la platine 12, l'axe 13 peut par exemple être supporté par une plaque support 14.

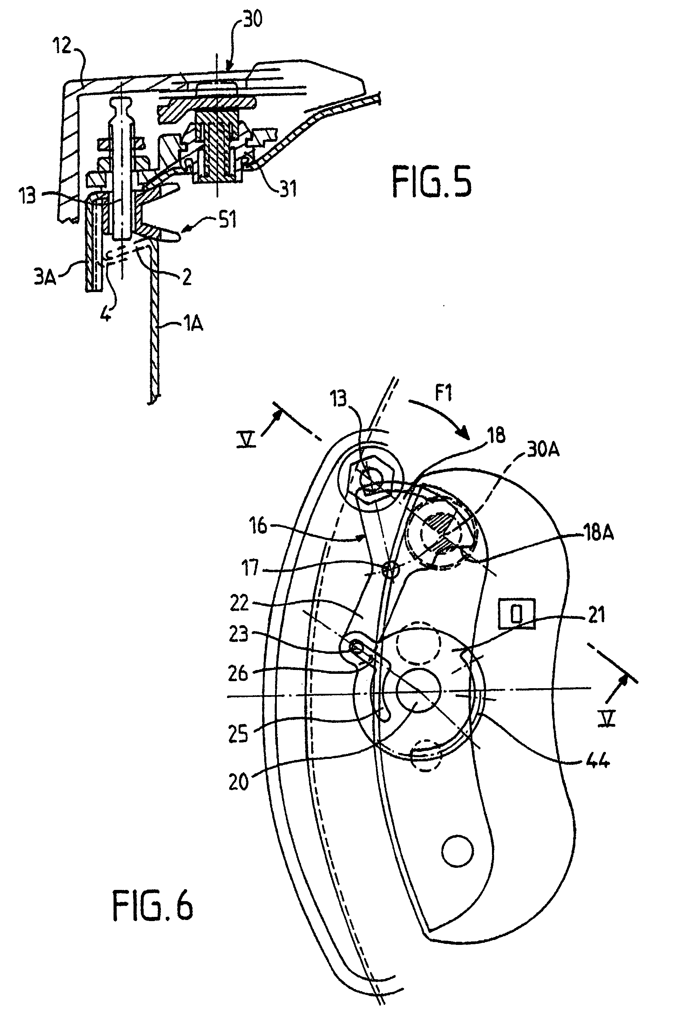

Selon l'invention, le moyen de commande 11 comporte un bouton sélecteur 15, monté en rotation sur la platine 12 selon au moins deux positions, et de préférence trois ou quatre positions, et agissant directement ou indirectement sur le moyen de verrouillage 10. Selon une variante préférentielle de l'invention, le bouton sélecteur 15 agit indirectement sur le moyen de commande 11, en l'occurrence sur l'axe 13, par l'intermédiaire d'un levier 16 (figures 6, 8, 10 et 11 par exemple), articulé entre ledit bouton et ledit moyen de commande, et assurant l'interface mécanique entre le bouton sélecteur 15 et le moyen de verrouillage 10. Le déplacement en translation selon une direction sensiblement verticale de l'axe 13 est obtenu par l'intermédiaire de la rotation du levier 16. Ce dernier est articulé, sensiblement vers sa moitié par un pivot 17 et comporte une extrémité évasée en arc de cercle 18 destinée à engager le moyen de commande 10 et en particulier la partie supérieure de l'axe 13. Le montage préférentiel est tel que l'extrémité 18 engage une fente 19 (figure 2), de forme sensiblement hélicoïdale, ménagée dans et à la périphérie de l'axe 13 pour que le levier articulé 16 assure par rotation autour de son pivot 17 le déplacement et la translation de l'axe 13 entre sa position de verrouillage et de déverrouillage, et inversement. Il est également envisageable d'inverser ce montage mécanique et de réaliser une rampe de commande oblique sur l'extrémité 18 pour déplacer l'axe 13, ou encore de réaliser une fente sur l'extrémité 18 et une rampe sur l'axe 13. Le montage doit donc prévoir en fin de compte que l'extrémité 18 engage et coopère avec l'axe 13 par l'intermédiaire de moyens de coopération de forme hélicoïdale et disposés respectivement sur l'axe 13 et sur l'extrémité 18 pour assurer le déplacement longitudinal de l'axe 13.

Tel qu'illustré par exemple à la figure 7 et aux figures 6, 8, 10 et 11, le bouton sélecteur 15 est monté en rotation sur la platine 12 par l'intermédiaire d'un axe central 20, sensiblement vertical. Sur cet axe 20 est calé angulairement une collerette 21 de dimension suffisante pour surplomber et recouvrir au moins partiellement, sur un secteur angulaire de rotation, la seconde extrémité 22 du levier articulé 16. La seconde extrémité 22 s'étend en partie sous la collerette 21 et comporte vers son bord extrême un doigt vertical 23 monté pour s'engager dans une fente de guidage ménagée dans la collerette 21 et comportant un brin circulaire 25 et un brin radial 26. Grâce à ce montage, le doigt vertical 23 est guidé dans la fente de guidage et, suivant la rotation du bouton sélecteur 15, le levier 16 peut être amené à se déplacer en rotation autour de son axe pivot 17.

Selon une particularité de l'invention, le dispositif de sécurité et verrouillage/déverrouillage comporte également un indicateur de pression 30, monté librement mobile sur le couvercle 3, de préférence dans ou sur la platine 12, pour se déplacer, dans un siège de réception, entre une position haute d'étanchéité et basse de fuite selon la pression régnant dans l'appareil.

L'indicateur de pression 30 se présente sous la forme d'un pion cylindrique 30A monté mobile par translation verticale dans un siège de réception 31 lui-même solidaire, par exemple de la plaque 14 incluse dans la platine 12. L'orifice inférieur 32 du siège de réception 31 débouche à travers le couvercle 3 dans l'enceinte ou la cuve de l'autocuiseur. Le pion cylindrique 30A et le siège de réception 31 sont conformés pour qu'en position haute le pion cylindrique 30A soit en appui étanche contre le siège de réception 31, alors qu'en position basse une fuite de pression est possible. La position basse correspond donc à une position basse de fuite de pression.

Avantageusement, tel que représenté notamment aux figures 6, 8, 10 et 11, l'indicateur de pression 30, le moyen de verrouillage 10, et le moyen de commande 11 sont agencés et montés relativement entre eux de telle sorte que :
- lorsque le moyen de commande 11 et le moyen de verrouillage 10 occupent leur position de déverrouillage, le moyen de commande 11 bloque le déplacement de l'indicateur de pression 30 à partir de sa position basse,
- lorsque le moyen de commande 11 et le moyen de verrouillage 10 occupent leur position de verrouillage correspondant à la position d'ouverture de l'appareil, le moyen de commande 11 laisse l'indicateur de pression 30 libre de se déplacer, mais est susceptible d'être bloqué en position de verrouillage si l'indicateur 30 est en position haute.

Conformément à l'invention, le moyen de commande 11 comprend, tel que décrit précédemment, un bouton sélecteur 15 associé mécaniquement et fonctionnellement au moyen de verrouillage 10 par l'intermédiaire du levier articulé 16 agissant par l'extrémité 18 sur le moyen de verrouillage 10 pour assurer son déplacement. Additionnellement, le levier articulé 16 agit également par son extrémité 18 sur l'indicateur de pression 30 pour assurer son blocage en position basse.

A cette fin, l'indicateur de pression 30 est monté relativement au levier articulé 16 pour que son extrémité 18 recouvre l'indicateur de pression 30, en l'occurrence le pion cylindrique 30A, lorsque le bouton sélecteur 15 est en position de verrouillage (figure 6) pour l'empêcher de monter. En effet, pour arriver à cette position de déverrouillage, correspondant à une position du bouton sélecteur 15 noté O sur les figures 1 et 6, le levier articulé 16 a pivoté selon le sens noté F1 sur la figure 6, commandant la translation verticale vers le haut de l'axe 13 et vient recouvrir le pion cylindrique 30A lorsqu'il se trouve en position basse. Dans cette position, l'indicateur de pression 30 est en position de fuite de pression et est empêché de se déplacer par la présence de l'extrémité 18. La fermeture ou l'ouverture de l'autocuiseur est donc possible. En revanche, l'extrémité 18 du levier articulé 16 est située au voisinage de l'indicateur de pression 30 pour qu'en position de verrouillage, correspondant par exemple à la figure 8 (position notée V à la figure 1), l'indicateur de pression 30 puisse se déplacer librement, ledit levier étant susceptible dans cette position d'être bloqué contre l'indicateur de pression 30. Avantageusement, l'extrémité 18 affleure latéralement dans cette position la périphérie externe de l'indicateur de pression 30. Avantageusement, tel que montré aux figures 8, 10 et 11, l'extrémité 18 en arc de cercle convexe comporte un bord latéral courbe 18A, et par exemple en arc de cercle concave, pour épouser la forme de la périphérie du pion cylindrique 30A. Dans toutes les positions montrées aux figures 8, 10 et 11 correspondant respectivement aux positions notées V, I et II à la figure 1, le moyen de verrouillage 10 est dans sa position basse de verrouillage et l'indicateur de pression 30 peut se déplacer librement en altitude. Si un minimum de pression règne dans l'enceinte de l'autocuiseur, il est impossible pour l'utilisateur de placer le bouton sélecteur 15 en position d'ouverture car la position haute de l'indicateur de pression 30 limite la rotation du levier articulé 16.

Selon une variante particulièrement intéressante de l'invention, le moyen de commande 11 est associé mécaniquement et fonctionnellement par l'intermédiaire du bouton sélecteur 15 à une soupape de fonctionnement tarée 40 (figure 7) pour en contrôler le tarage.

La soupape de fonctionnement tarée 40 est montée dans ou sur la platine 12 et est, de manière classique, montée librement mobile de manière élastique par un moyen élastique tel un ressort du genre hélicoïdal, (non représenté aux figures) dans un siège de réception. La soupape de fonctionnement tarée 40 est également soumise à la pression interne régnant dans l'enceinte de l'autocuiseur par l'intermédiaire d'un orifice 41 situé vers sa partie inférieure et débouchant dans la cuve 1. La partie supérieure 42 de la soupape de fonctionnement tarée 40 est en contact avec le bouton sélecteur 15 pour pouvoir être manoeuvrée par ce dernier. Selon la variante de réalisation illustrée à la figure 7, le bouton sélecteur 15 est en contact avec la soupape de fonctionnement tarée 40 au moyen de la collerette 21 qui agit par l'intermédiaire d'un profil de came 44 sur la partie supérieure 42.

Avantageusement, le profil de came 44 est calculé de manière à agir sur la soupape de fonctionnement tarée 40 selon au moins deux positions de contrôle, à l'encontre de son moyen élastique. Ainsi, le bouton sélecteur 15 agit sur la soupape de fonctionnement tarée 40 en occupant deux positions correspondant respectivement :
- à la position de verrouillage V (figure 1 par exemple) pour la libérer de toute compression élastique à l'encontre du moyen élastique de compression (la soupape de fonctionnement 40 n'est alors soumise qu'à l'action de son propre poids),
- à une première position de compression représentative d'une première valeur de tarage correspondant par exemple à un fonctionnement de l'appareil limité à environ 550 millibars de surpression.

Avantageusement, le bouton sélecteur 15 agit sur la soupape de fonctionnement tarée 40 selon une seconde position de compression (figure 11) représentative également d'une seconde valeur de tarage du moyen élastique correspondant par exemple à un fonctionnement de l'appareil sous une pression limite de l'ordre de 900 millibars de surpression. Dans la position de verrouillage du système de verrouillage/déverrouillage conforme à l'invention, le profil de came 44 affleure par exemple la partie supérieure 42 de manière à n'exercer aucune compression sur le moyen élastique, libérant ainsi la soupape de fonctionnement tarée 40. Le profil de came 44 est ensuite régulièrement incliné en oblique de manière à venir comprimer le moyen élastique selon des valeurs croissantes correspondant aux deux positions de tarage définies précédemment et aux deux positions de rotation du bouton sélecteur 15. Bien évidemment, il est possible d'envisager un dispositif incorporant plus de trois positions de fonctionnement de la soupape de fonctionnement sans pour autant sortir du cadre de l'invention.

Le dispositif de sécurité conforme à l'invention peut enfin comporter, tel que cela est par exemple visible à la figure 7, des dispositifs annexes de sécurité, tels qu'un clapet de sécurité 50.

Conformément à l'invention, le moyen de verrouillage 10, le moyen de commande 11 et la soupape de fonctionnement tarée 40 sont intégrés dans un ensemble unitaire, incluant la platine 12, monté amovible sur le couvercle 3, par tous moyens appropriés, et par exemple par vissage.

Selon une variante préférentielle de l'invention, telle qu'illustrée aux figures 2, 5 et 9 par exemple, le moyen de verrouillage 10, en l'occurrence l'axe 13, traverse un joint d'étanchéité 51 monté, de manière classique, entre le couvercle 3 et la cuve 1. Avantageusement, l'axe 13 traverse le joint d'étanchéité 51 pour servir de moyen d'indexation dudit joint et le bloquer en rotation dans le couvercle 3. Le joint d'étanchéité 51 est, de manière classique, réalisé en matériaux élastomères et comporte par exemple deux lèvres 52, 53. Le joint d'étanchéité 51 comporte un perçage 54 ménagé dans son corps principal de manière qu'en position de déverrouillage, le joint d'étanchéité 51 puisse être entité sur l'axe 13 par l'intermédiaire du perçage 54. De cette façon, le joint d'étanchéité 51 est bloqué en rotation dans le couvercle 3.

Le fonctionnement du mécanisme de verrouillage/déverrouillage conforme à l'invention est le suivant.

Pour la fermeture et l'ouverture de l'appareil, le bouton sélecteur 15 doit être amené par l'utilisateur dans sa position d'ouverture notée O. Dans cette position (figures 5 et 6 par exemple), l'axe 13 est en position haute et l'indicateur de pression 30 est obligatoirement en position basse car le verrou articulé 16 limite son déplacement en altitude puisque la partie incurvée 18 surplombe ledit indicateur. L'appareil ne peut pas monter en pression car l'indicateur de pression 30 est dans sa position basse dans laquelle une fuite de pression entre la cuve 1 et le couvercle 3 est possible. Il est donc possible pour l'utilisateur d'ouvrir ou de fermer l'appareil sans précaution particulière par rotation du couvercle 3, par exemple dans le sens F2 noté à la figure 1, pour atteindre la position notée en pointillés sur ladite figure 1.

Pour la fermeture de l'appareil, l'utilisateur doit tout d'abord positionner le couvercle 3 sur la cuve 1 dans la position notée en pointillés sur la figure 1. L'utilisateur amène ensuite par rotation, dans le sens opposé à la flèche F2, le couvercle 3 dans la position montrée en trait plein sur la figure 1. Pour assurer la fermeture de l'appareil, le bouton sélecteur 15 étant au cours de toutes les opérations précédentes dans la position notée O, l'utilisateur amène par rotation le bouton de sélection 15 dans la position de verrouillage notée V et montrée à la figure 8. Au cours de sa rotation, le bouton sélecteur 15 assure la rotation du levier articulé 16 qui, d'une part, découvre l'indicateur de pression 30, et, d'autre part, assure le déplacement vers le bas de l'axe 13. En effet, le déplacement de l'extrémité 18 dans la fente de guidage de l'axe 13 assure la descente sensiblement verticale de l'axe 13 et le verrouillage de la rotation relative du couvercle 3 relativement à la cuve 1, puisque l'axe 13 vient en affleurement contre le bord latéral 2A de la rampe de cuve 4 (figure 4). Si l'utilisateur veut ouvrir l'appareil, il doit tourner le bouton sélecteur 15 en position O. Par ailleurs, l'indicateur de pression 30 est libre de se déplacer en altitude. Néanmoins, le bouton sélecteur 15 étant dans la position de verrouillage V, la soupape de fonctionnement tarée 40 est libre de se déplacer sans contrainte élastique, ce qui n'autorise pas l'autocuiseur à monter en pression.

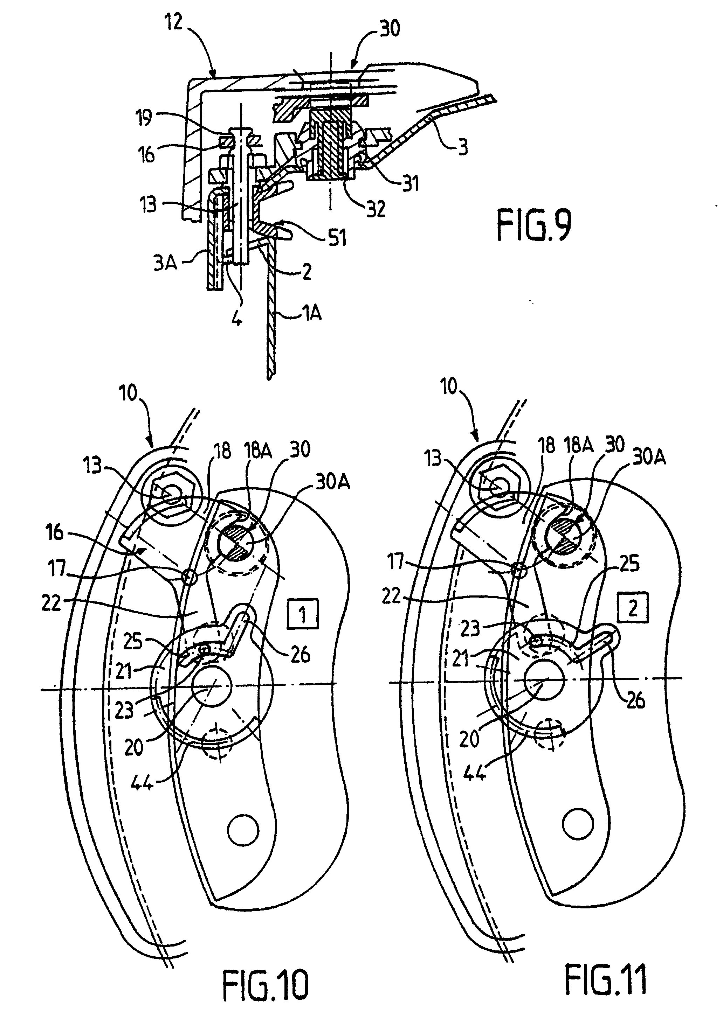

Pour cela, l'utilisateur doit positionner le sélecteur dans la première position de tarage (figure 10). Au cours de ce déplacement vers cette position, le verrou articulé 16 reste immobile puisque le doigt 23 peut se déplacer librement dans le brin circulaire 23 de la fente de guidage de la collerette 21. La soupape de fonctionnement tarée 40 étant désormais comprimée élastiquement, l'appareil peut monter en pression. L'utilisateur peut également, selon le type de cuisson désiré, positionner le bouton sélecteur 15 selon la deuxième position de tarage, tel que montré par exemple à la figure 11. Dans cette deuxième position, l'axe 13 est toujours bien évidemment dans sa position de verrouillage, puisque le levier articulé 16 est demeuré statique, le doigt 23 ayant seulement atteint sa position limite dans la fente de guidage. Par ailleurs, l'indicateur de pression 30 étant dans sa position haute en cas de pression, il est impossible pour l'utilisateur de placer le bouton sélecteur 15 en position d'ouverture. En effet, la position haute de l'indicateur de pression 30 bloque la rotation du levier articulé 16 qui fonctionne comme un verrou.

Si l'utilisateur veut ouvrir l'appareil, il doit donc tout d'abord placer le bouton sélecteur 15 en position de verrouillage V dans laquelle la soupape de fonctionnement tarée 40 devient libre pour laisser échapper la vapeur et faire chuter la pression contenue à l'intérieur de l'appareil. Lorsque la pression est inférieure à une valeur de l'ordre par exemple de 0,5 Kpa, l'indicateur de pression 30 revient dans sa position basse, ce qui permet à l'utilisateur de pouvoir tourner le bouton sélecteur 15 vers la position d'ouverture O. En effet, le levier articulé 16 peut désormais être mis en rotation pour atteindre la position notée O (figure 6), ce qui permet à l'axe 13 de se translater vers le haut sous l'effet de soulèvement créé par le levier articulé 16. L'axe 13 atteint donc sa position de déverrouillage, ce qui permet l'ouverture de l'autocuiseur en toute sécurité, toute surpression ayant été évacuée au préalable.

L'invention permet en conséquence d'assurer un verrouillage direct entre la cuve et le couvercle et d'obtenir une sécurité totale de l'appareil puisque ce dernier ne peut monter en pression s'il est mal fermé et ne peut être ouvert qu'en passant au préalable obligatoirement par la position de verrouillage V, dans laquelle toute surpression éventuelle dans l'autocuiseur est évacuée. Par ailleurs, l'appareil ne peut être ouvert que si la pression interne de l'appareil tend vers zéro. Le mécanisme de verrouillage est par ailleurs indépendant des poignées de cuve, ce qui simplifie la construction de l'appareil.

### POSSIBILITE D'APPLICATION INDUSTRIELLE

L'invention trouve son application industrielle dans la fabrication d'appareils domestiques de cuisson sous pression, notamment d'autocuiseurs.

## Revendications

1. Dispositif de sécurité à l'ouverture épuipant un appareil de cuisson sous pression à fermeture à baïonettes comportant :
- une cuve (1) avec des rampes de cuve (2),
- un couvercle (3) avec des rampes de couvercle (4),
- un moyen de butée (8) en rotation du couvercle (3) relativement à la cuve (1), disposé pour qu'en position de fermeture les rampes de couvercle (4) engagent les rampes de cuve (2), le couvercle (3) et la cuve (1) étant alors bloqués en rotation dans le sens de rotation correspondant à la fermeture de l'appareil,
- un moyen de verrouillage (10) relatif du couvercle (3) et de la cuve (1) monté mobile sur l'appareil, sous l'action d'un moyen de commande (11) susceptible d'être actionné par l'utilisateur, entre au moins une position de déverrouillage permettant l'ouverture de l'appareil et au moins une position de verrouillage dans laquelle la rotation relative de la cuve (1) et du couvercle (3) est bloquée,
- un indicateur de pression (30, 30A), monté librement mobile sur le couvercle (3) pour se déplacer entre une position haute d'étanchéité et basse de fuite selon la pression régnant dans l'appareil,
**caractérisé en ce que** l'indicateur de pression (30, 30A), le moyen de commande (11) et le moyen de verrouillage (10) font partie d'un ensemble unitaire (12) monté sur le couvercle (3) et indépendant des poignées (5) de l'appareil de cuisson.

2. Dispositif selon la revendication 1 **caractérisé en ce que** l'ensemble unitaire (12) est monté amovible.

3. Dispositif selon la revendication 1 ou 2 **caractérisé en ce que** l'indicateur de pression (30, 30A) est monté de telle sorte que :
- lorsque le moyen de commande (11) et le moyen de verrouillage (10) occupent leur position de déverrouillage, le moyen de commande (11) bloque le déplacement de l'indicateur de pression (30, 30A) à partir de sa position basse,
- lorsque le moyen de commande (11) et le moyen de verrouillage (10) occupent leur position de verrouillage, le moyen de commande (11) laisse l'indicateur de pression (30, 30A) libre de se déplacer, mais est susceptible d'être bloqué en position de verrouillage si l'indicateur (30, 30A) est en position haute.

4. Dispositif selon l'une des revendications 1 à 3 **caractérisé en ce que** le moyen de commande (11) comporte un bouton sélecteur (15) associé mécaniquement au moyen de verrouillage (10) par un levier articulé (16) agissant, par une extrémité (18), sur le moyen de verrouillage (10) pour assurer son déplacement, et sur l'indicateur de pression (30, 30A) pour assurer son blocage.

5. Dispositif selon la revendication 4 **caractérisé en ce que** le moyen de verrouillage (10) est formé par un axe (13) sensiblement parallèle à la paroi de cuve (1A), et **en ce que** l'extrémité (18) engage et coopère avec l'axe (13) par l'intermédiaire de moyens de coopération de forme sensiblement hélicoïdale, pour assurer le déplacement longitudinal de l'axe (13).

6. Dispositif selon l'une des revendications 4 ou 5 **caractérisé en ce que** l'extrémité (18) du levier (16) recouvre l'indicateur de pression (30, 30A), en position de déverrouillage pour l'empêcher de monter, et est située au voisinage de l'indicateur (30,30A), en position de verrouillage, pour lui permettre de se déplacer, ledit levier (16) étant susceptible d'être bloqué contre l'indicateur de pression (30,30A).

7. Dispositif selon l'une des revendications 4 à 6 **caractérisé en ce que** le moyen de commande (11) est associé mécaniquement par l'intermédiaire du bouton sélecteur (15) à une soupape de fonctionnement tarée (40) pour en contrôler le tarage.

8. Dispositif selon la revendication 7 **caractérisé en ce que** le bouton sélecteur (15) agit par l'intermédiaire d'un profil de came (44) sur la soupape de fonctionnement tarée (40) selon au moins deux positions.

9. Dispositif selon la revendication 8 **caractérisé en ce que** le bouton sélecteur (15) agit sur la soupape de fonctionnement tarée (40) selon deux positions correspondant respectivement à la position de verrouillage pour la libérer de toute compression élastique, et à une première position de compression représentative d'une première valeur de tarage.

10. Dispositif selon la revendication 9 **caractérisé en ce que** le bouton sélecteur (15) agit sur la soupape de fonctionnement tarée (40) selon une seconde position de compression représentative d'une seconde valeur de tarage.

11. Appareil de cuisson sous pression équipé d'un dispositif conforme à l'une des revendications 1 à 10.

## Patentansprüche

1. Sicherheitsvorrichtung zum Öffnen von Dampfdruckkochtöpfen mit Bajonettverschluss mit
- einem Topf (1) mit Topfrändern (2),
- einem Deckel (3) mit Deckelrändern (4), wobei diese Vorrichtung aufweist:
- ein Mittel zum Anschlagen (8) beim Drehen des Deckels (3) relativ zum Topf (1), das so angeordnet ist, dass in Schliessstellung die Deckelränder (4) in die Topfränder (2) eingreifen, wobei der Deckel (3) und der Topf (1) dann zum Drehen blockiert sind in der Drehrichtung, die dem Schließen der Vorrichtung entspricht,
- ein Mittel zum Verriegeln (10) des Deckels (3) relativ zum Topf (1), das beweglich auf der Vorrichtung angeordnet ist, unter der Wirkung einer Steuervorrichtung (11), die geeignet ist vom Nutzer betätigt zu werden, zwischen mindestens einer Entriegelungsstellung, die das Öffnen der Vorrichtung ermöglicht und mindestens einer Verriegelungsstellung, in der die Drehung des Topfs (1) und des Deckels (3) relativ zu einander blockiert ist,
- einem Druckanzeiger (30, 30A), der frei beweglich auf dem deckel (3) montiert ist, um sich zwischen einer hohen Position der Dichtigkeit und einer niedrigen des Austritts entsprechend dem in der Vorrichtung herrschenden Druck zu bewegen,
**dadurch gekennzeichnet, daß** der Druckanzeiger (30, 30A), die Steuervorrichtung (11) und das Mittel zum Verriegeln (10) Teil eines einteiligen Aggregats (12) bilden, das auf dem Deckel (3) montiert und unabhängig von den Griffen (5) des Kochtopfs ist.

2. Vorrichtung gemäß dem Anspruch 1, **dadurch gekennzeichnet, dass** das einteilige Aggregat (12) abnehmbar montiert ist.

3. Vorrichtung gemäß dem Anspruch 1 oder dem Anspruch 2, **dadurch gekennzeichnet, dass** der Druckanzeiger (30, 30A) so montiert ist, dass:
- wenn die ,Steuervorrichtung (11) und das Mittel zum Verriegeln (10) ihre Entriegelungsposition einnehmen, die Steuervorrichtung (11) die Bewegung des Druckanzeigers (30, 30A) aus seiner niedrigen Position blockiert,
- wenn die Steuervorrichtung (11) und das Mittel zum Verriegeln (10) ihre Verriegelungsposition einnehmen, die Steuervorrichtung (11) die Bewegung des Druckanzeigers (30, 30A) freigibt, aber bereit ist, in der Verriegelungsposition blockiert zu werden, wenn der Anzeiger (30, 30A) in der oberen Position ist.

4. Vorrichtung gemäß einem der Ansprüche 1 bis 3, **dadurch gekennzeichnet, dass** die Steuervorrichtung (11) einen Wahlschalter (15) aufweist, der mechanisch mit dem Mittel zum Verriegeln (10)verbunden ist mittels einem Hebel (16) mit Gelenk, der mit einem Ende (18) auf das Mittel zum Verriegeln (10) wirkt, um seine Bewegung zu gewährleisten und auf den Druckanzeiger (30, 30A), um dessen Blockierung zu gewährleisten.

5. Vorrichtung gemäß einem der Ansprüche 1 bis 4, **dadurch gekennzeichnet, dass** das Mittel zum Verriegeln (10) gebildet ist aus einer Welle (13), die im wesentlichen parallel ist zur Wand (1a) des Topfs, und dadurch, dass das Ende (18) eingreift in und zusammen wirkt mit der Welle (13) mittels im wesentlichen helicoidal geformter Einrichtungen zum Zusammenwirken, um die longitudinale Bewegung der Welle (13) zu gewährleisten.

6. Vorrichtung gemäß einem der Ansprüche 4 oder 5, **dadurch gekennzeichnet, dass** das Ende (18) des Hebels (16) den Druckanzeiger (30, 30A) bedeckt, um ihn in der Entriegelungsposition zu hindern zu steigen, und neben dem Anzeiger (30, 30A) angeordnet ist in der Verriegelungsposition, um ihm zu ermöglichen sich zu bewegen, wobei dieser Hebel (16) geeignet ist, gegen den Druckanzeiger (30, 30A) blockiert zu werden.

7. Vorrichtung gemäß einem der Ansprüche 4 bis 6, **dadurch gekennzeichnet, dass** die Steuervorrichtung (11) mittels des Wahlschalters (15) mechanisch verbunden ist mit einem funktional abgestimmten Ventil (40), um die Abstimmung zu steuern.

8. Vorrichtung gemäß dem Anspruch 7, **dadurch gekennzeichnet, dass** der Wahlschalter (15) mittels einem Nockenprofil (44) auf das funktional abgestimmte Ventil (40) wirkt gemäß mindestens zweier Positionen.

9. Vorrichtung gemäß dem Anspruch 8, **dadurch gekennzeichnet, dass** der Wahlschalter (15) auf das funktional abgestimmte Ventil (40) wirkt gemäß zweier Positionen, die jeweils der Verriegelungsposition entsprechen, um dieses von jedem elastischen Druck frei zu halten und in einer ersten Position von dem Druck, der einem ersten Abstimmungswert entspricht.

10. Vorrichtung gemäß dem Anspruch 9, **dadurch gekennzeichnet, dass** der Wahlschalter (15) auf das funktional abgestimmte Ventil (40) wirkt gemäß einer zweiten Position des Drucks, der einem zweiten Abstimmungswert entspricht.

11. Dampfdruckkochtopf mit einer Vorrichtung gemäß einem der Ansprüche 1 bis 10.

## Claims

1. Safety opening device equipping a pressurised cooking apparatus with bayonet closure, comprising:
- a vessel (1) with vessel ramps (2),
- a cover (3) with cover ramps (4), the said device comprising:
- a means (8) for stopping the cover (3) in rotation relative to the vessel (1), disposed so that, in the closed position, the cover ramps (3) engage the vessel ramps (2), the cover (3) and the vessel (1) then being rotationally locked in the direction of rotation corresponding to the closure of the apparatus,
- a means (10) for relative locking of the cover (3) and vessel (1) mounted so as to be able to move on the apparatus, under the action of a control means (11) able to be actuated by the user, between at least one unlocking position allowing the opening of the apparatus and at least one locking position in which the relative rotation of the vessel (1) and cover (3) is inhibited,
- a pressure indicator (30, 30A), mounted so as to be able to move freely on the cover (3) in order to move between a high sealed position and a low leakage position according to the pressure prevailing in the apparatus,
**characterised in that** the pressure indicator (30, 30A), the control means (11) and the locking means (10) form part of a unitary assembly (12) mounted on the cover (3) and independent of the handles (5) of the cooking apparatus.

2. Device according to Claim 1, **characterised in that** the unitary assembly (12) is mounted so as to be removable.

3. Device according to Claim 1 or 2, **characterised in that** the pressure indicator (30, 30A) is mounted so that:
- when the control means (11) and the locking means (10) occupy their unlocking position, the control means (11) inhibits the movement of the pressure indicator (30, 30A) from its low position,
- when the control means (11) and the locking means (10) occupy their locking position, the control means (11) leaves the pressure indicator (30, 30A) free to move but is liable to be locked in the locking position if the indicator (30, 30A) is in the high position.

4. Device according to one of Claims 1 to 3, **characterised in that** the control means (11) comprises a selection knob (15) associated mechanically with the locking means (10) by means of an articulated lever (16) acting, through one end (18), on the locking means (10) in order to ensure its movement, and on the pressure indicator (30, 30A) in order to ensure its locking.

5. Device according to Claim 4, **characterised in that** the locking means (10) is formed by a spindle (13) which is substantially parallel to the vessel wall (1A), and **in that** the end (18) engages and cooperates with the spindle (13) by means of cooperation means with a substantially helical shape, in order to ensure the longitudinal movement of the spindle (13).

6. Device according to one of Claims 4 or 5, **characterised in that** the end (18) of the lever (16) covers the pressure indicator (30, 30A) in the unlocking position in order to prevent it from rising, and is situated in the vicinity of the indicator (30, 30A) in the locking position to enable it to move, the said lever (16) being able to be locked against the pressure indicator (30, 30A).

7. Device according to one of Claims 4 to 6, **characterised in that** the control means (11) is mechanically associated, by means of a selection knob (15), with a calibrated operating valve (40) in order to control its calibration.

8. Device according to Claim 7, **characterised in that** the selection knob (15) acts by means of a cam profile (44) on the calibrated operating valve (40) according to at least two positions.

9. Device according to Claim 8, **characterised in that** the selection knob (15) acts on the calibrated operating valve (40) according to two positions corresponding respectively to the locking position in order to release it from any elastic compression and to a first compression position representing a first calibration value.

10. Device according to Claim 9, **characterised in that** the selection knob (15) acts on the calibrated operating valve (40) according to a second compression position representing a second calibration value.

11. Pressurised cooking apparatus equipped with a device according to one of Claims 1 to 10.
